# FASCICULE DE BREVET EUROPEEN

(11) **EP 2 406 199 B1**
(45) Date de publication et mention de la délivrance du brevet: **05.03.2014**
(21) Numéro de dépôt: 10715928.7
(22) Date de dépôt: 12.03.2010
(51) Int. Cl.: C04B 28/02, C04B 24/26, C04B 22/08, C04B 24/24, C04B 103/10, C04B 103/32

(54) **SYSTÈME D'ADJUVANTS POUR BÉTON PRÉFABRIQUÉ**
ZUSATZSYSTEM FÜR FERTIGBETON
ADMIXTURE SYSTEM FOR PREFABRICATED CONCRETE

(30) Priorité: 12.03.2009 FR 0951547
(43) Date de publication de la demande: 18.01.2012
(73) Titulaire: Chryso, 92440 Issy-Les-Moulineaux (FR)
(72) Inventeur: SEURRE, Jérôme, F-51100 Reims (FR); PELLERIN, Bruno, F-77210 Avon (FR); BIGAS, Jean-Philippe, F-45300 Pithiviers Le Vieil (FR)
(74) Mandataire: Blot, Philippe Robert Emile
(86) Numéro de dépôt international: PCT/FR2010/050438
(87) Numéro de publication internationale: WO 2010/103253

(56) Documents cités:
- WO-A1-02/18291
- WO-A1-2009/024105
- FR-A1- 2 696 736
- FR-A1- 2 892 420
- US-A1- 2006 207 479
- GONCALVES, A. ET AL: "Comparative study of influence of superplasticizers and superplasticizer/plasticizer blends on slump-loss" AMERICAN CONCRETE INSTITUTE, SP , SP-195(SIXTH CANMET/ACI INTERNATIONAL CONFERENCE ON SUPERPLASTICIZERS AND OTHER CHEMICAL ADMIXTURES IN CONCRETE, 2000), 2000, pages 321-333, XP8115367 ISSN: 0193-2527
- Anonyme: "CHRYSO Fluid Optima & Fluid Premia, Time challenging admixtures // Les adjuvants qui défient le temps" CHRYSO Product Brochure INTERNET CITATION 14 décembre 2006 (2006-12-14), pages 1-8, XP002556541 Extrait de l'Internet: URL:http://fr.chryso.com/upload/t_document s/Fichier_L2/23004/2005_Doc_Optima_Premia_ pour_web.pdf [extrait le 2009-11-20]
- Anonyme: "CHRYSO Fluid Premia 196" CHRYSO TECHNICAL DATA SHEET INTERNET CITATION mars 2006 (2006-03), pages 1-2, XP002556542 Extrait de l'Internet: URL:http://fr.chryso.com/upload/t_document s/Fichier_L2/48629/FT_CHRYSO_Fluid_Premia_ 196_gb.pdf [extrait le 2009-11-20]
- ANONYME: "CHRYSO Fluid Optima 100" CHRYSO TECHNICAL DATA SHEET INTERNET CITATION février 2006 (2006-02), pages 1-2, XP002556543 Extrait de l'Internet: URL:http://fr.chryso.com/upload/t_document s/Fichier_L2/48629/FT_CHRYSO_Fluid_Premia_ 196_gb.pdf [extrait le 2009-11-20]

## Description

La présente invention concerne un système d'adjuvants pour béton, particulièrement utile pour le béton préfabriqué.

Le béton préfabriqué est utilisé pour la réalisation, généralement par coulage, d'éléments de construction en béton en série comme des dalles, des murs, des poutres, des panneaux de façade. Le béton préfabriqué est généralement de type béton armé ou béton précontraint.

L'ajout d'adjuvants permet de préparer des formulations de bétons adaptées aux contraintes techniques.

Dans les formulations de béton préfabriqué, les contraintes techniques sont notamment le maintien d'ouvrabilité et la résistance précoce. En effet, afin de permettre une certaine souplesse lors de la fabrication, il est souhaité de pouvoir disposer d'un certain temps pour manipuler les formulations de béton après leur confection, ce temps étant appelé ouvrabilité. Cependant, la prise ne doit pas pour autant être trop retardée au risque de diminuer les résistances précoces. Les résistances précoces désignent la résistance à la compression R_{c} du matériau à jeunes âges, quelques heures après le malaxage.

Pour la préparation de pièces de béton préfabriquées par coulage dans des moules, on recherche ainsi des formulations de béton permettant d'atteindre une ouvrabilité d'au moins 30 minutes pour permettre une mise en place facilitée et garantir un bel aspect de parement et une résistance à la compression R_{c} supérieure à une dizaine de MPa au bout de quelques heures pour permettre le démoulage et le déplacement des pièces en béton armé, voire supérieure à une trentaine de MPa au bout de quelques heures pour permettre la détente des câbles de précontrainte. De préférence, ce niveau de résistances est obtenu à température ambiante sans chauffage des moules (étuvage).

Dans l'article "Comparative study of influence of Superplasticizerss and Superplasticizer/Plasticizer Blends on Slump-Loss", page 321-333 presenté au 6th CANMET/ACI International Conférence on Superplasticizers and other chemical admixtures in Concrete, 2000, A. Gonçalves et al. proposent l'utilisation de mélanges de fluidifiants et superplastifiants pour maintenir l'affaissement sans sacrifier aux résistances précoces.

Un objet de la présente invention était donc de proposer un système d'adjuvants optimisé pour des bétons préfabriqués, permettant d'atteindre un meilleur compromis des propriétés importantes dans cette application.

Un autre objet de l'invention était de proposer un procédé de préparation de bétons préfabriqués ayant un compromis de propriétés optimisé, notamment en ce qui concerne le maintien d'ouvrabilité et la rapidité de la montée en résistance.

Enfin, un autre objet de l'invention enfin était de proposer une utilisation du système d'adjuvants optimisés pour la préparation de bétons préfabriqués présentant une ouvrabilité d'au moins 30 minutes et une résistance à la compression Rc à 4 heures d'au moins 3MPa.

L'invention est basée sur la constatation qu'un système d'adjuvant associant un accélérateur, un superplastifiant et un système extendeur de rhéologie permettait l'accès à des formulations de béton dont les propriétés constituent un compromis particulièrement intéressant pour le béton préfabriqué.

Selon un premier aspect, l'invention vise donc un système d'adjuvants pour béton comprenant en association :
(a) un superplastifiant
(b) un accélérateur ; et
(c) un extendeur de rhéologie.

L'accélérateur est de préférence choisi parmi les sels de calcium, notamment parmi le nitrate calcium, le nitrite de calcium, le chlorure de calcium ou le thiocyanate de calcium.

Le superplastifiant est avantageusement un polymère peigne comportant au moins les motifs (I) et (II) suivants :

*-R1-(C(O))ₘ-R₂-(Alk-O)ₙ-R3 (I)

où * désigne le point de rattachement au squelette du polymère peigne, R1 une liaison chimique ou un groupement alkylène de 1 à 8 atomes de carbone, m vaut 0 ou 1, R2 désigne un atome d'oxygène ou un groupement amine, Alk désigne un alkylène de 2 à 4 atomes de carbone linéaire ou ramifié, n désigne un nombre entier compris entre 3 et 500, un même polymère pouvant porter des greffons de longueurs différentes, et R3 désigne un atome d'hydrogène ou un groupement hydrocarboné tel qu'un alkyle comportant de 1 à 25 atomes de carbone.

*-R4 (II)

où R4 comprend une fonction anionique à pH supérieur à 10.

L'extendeur de rhéologie est de préférence un polyphosphonate polyalkoxylé de formule (III) ou un de ses sels, seul ou en mélange.: 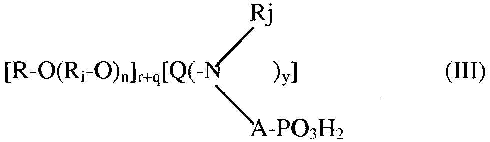 dans laquelle :
R est un atome d'hydrogène ou un groupe hydrocarboné monovalent comportant de 1 à 18 atomes de carbone et éventuellement un ou plusieurs hétéroatomes ;
les Rᵢ sont semblables ou différents entre eux et représentent un alkylène comme l'éthylène, le propylène, le butylène, l'amylène, l'octylène ou le cyclohexène, ou un arylène comme le styrène ou le méthylstyrène, les Rᵢ renferment éventuellement un ou plusieurs hétéroatomes ;
Q est un groupe hydrocarboné comportant de 2 à 18 atomes de carbone et éventuellement un ou plusieurs hétéroatomes ;
A est un groupe alkylidène comportant de 1 à 5 atomes de carbone ;
les Rⱼ sont semblables ou différents entre eux et peuvent être choisis parmi:
   - le groupe A-PO₃H₂, A ayant la signification précitée,
   - le groupe alkyle comportant de 1 à 18 atomes de carbone et pouvant porter des groupements [R-O(Rᵢ-O)ₙ], R et Rᵢ ayant les significations précitées,
   - et le groupe 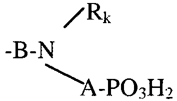
      Rₖ désignant un groupement tel que Rⱼ, - B désignant un groupement alkylène comportant de 2 à 18 atomes de carbone,
      "n" est un nombre supérieur ou égal à 0,
      "r" est le nombre des groupes [R-O(Rᵢ-O)ₙ] portés par l'ensemble des Rj,
      "q" est le nombre des groupes [R-O(RᵢO)ₙ] portés par Q, la somme
      "r+q" est comprise entre 1 et 10,
      "y" est un nombre entier compris entre 1 et 3,
      Q, N et les Rⱼ peuvent former ensemble un ou plusieurs cycles, ce ou ces cycles pouvant en outre contenir un ou plusieurs autres hétéroatomes.

Particulièrement préféré est un polyphosphonate polyalkoxylé constitué d'un composé organique hydrosoluble ou hydrodispersible comportant au moins un groupement amino-di-(alkylène-phosphonique) et au moins une chaîne polyoxyalkylée ou au moins un de ses sels.

En particulier, l'extendeur de rhéologie peut être un polyphosphonate polyalkoxylé de formule (III) dans laquelle R est un groupe méthyle, les Rᵢ sont des groupements éthylène et propylène, n étant compris entre 30 et 50, r+q vaut 1, Q est un groupe éthylène, A est un groupe méthylène, y vaut 1 et Rⱼ correspond au groupe CH₂-PO₃H₂.

Le système selon l'invention comprend le plus souvent en poids sec par rapport au poids de liant total 0,3 à 4% d'accélérateur, 0,05 à 2% de superplastifiant et de 0,005 à 1% d'extendeur de rhéologie.

Selon un deuxième aspect, l'invention vise un procédé de préparation de béton préfabriqué comprenant l'étape de :
- ajouter en quantité appropriée respectivement
   (a) un superplastifiant ;
   (b) un accélérateur et
   (c) un extendeur de rhéologie,
   simultanément ou successivement, à la pâte de béton lors du gâchage.

Enfin, selon un troisième aspect, l'invention vise l'utilisation du système d'adjuvant décrit pour la préparation de bétons préfabriqués.

Selon l'invention, le système d'adjuvant comporte en association un accélérateur, un superplastifiant et un extendeur de rhéologie.

Dans le contexte des formulations pour béton préfabriqué, le but est d'augmenter les résistances à la compression à jeunes âges (4, 6, 8 heures) tout en assurant une ouvrabilité d'au moins 30 minutes et de préférence d'au moins 45 minutes.

L'accélérateur est un composé ayant pour effet d'accélérer la vitesse d'hydratation du ciment, raccourcissant ainsi le temps de prise et accélérant la vitesse de montée en résistance.

De tels adjuvants sont mentionnés comme adjuvants de classe C avec leurs critères de performance dans la norme ASTM C494.

De préférence, l'accélérateur est un sel de calcium. De préférence le sel de calcium est un nitrite de calcium ou un nitrate de calcium ou un thiocyanate de calcium, ou un chlorure de calcium ou un mélange de ces sels. De façon encore plus préférentielle, l'accélérateur est un nitrite de calcium.

Le dosage d'accélérateur dans le cadre du système selon l'invention dépend de la formulation de béton, mais est le plus souvent de 0,3 à 4% en poids sec d'accélérateur par rapport au poids de liant total, le liant total étant défini comme la somme des poids du ciment et des charges (filler).

Le superplastifiant est un composé ayant pour effet de réduire la quantité d'eau nécessaire pour l'obtention d'un béton présentant un étalement donné.

De tels adjuvants sont mentionnés comme adjuvants de classe C avec leurs critères de performance dans la norme ASTM C494.

On connaît notamment des polymères superplastifiants de type polycarboxylates polyalkoxylés, par exemple des demandes de brevet US 6,858,074, EP 1 061 089 et US 7,736,488.

Particulièrement appropriés sont les superplastifiants de type polymère peigne comportant au moins les motifs (I) et (II) suivants :

*-R1-(C(O))ₘ-R₂-(Alk-O)ₙ-R3 (I)

où * désigne le point de rattachement au squelette du polymère peigne, R1 une liaison chimique ou un groupement alkylène de 1 à 8 atomes de carbone, m vaut 0 ou 1, R2 désigne un atome d'oxygène ou un groupement amine, Alk désigne un alkylène de 2 à 4 atomes de carbone linéaire ou ramifié (cela s'entend au sens large, plusieurs types d'alkylènes pouvant être présents sur le même greffon ou sur le même polymère), n désigne un nombre entier compris entre 3 et 500, un même polymère pouvant porter des greffons de longueurs différentes, et R3 désigne un atome d'hydrogène ou un groupement hydrocarboné tel qu'un alkyle comportant de 1 à 25 atomes de carbone.

*-R4 (II)

où R4 comprend une fonction anionique à pH supérieur à 10. Ces fonctions peuvent notamment être des fonctions carboxyliques ou des fonctions sulfonate.

Par superplastifiant de type polymère peigne, on entend aussi les superplastifiants obtenus par mélange de polymères différents comportant des motifs de type (I) et (II).

Le dosage de superplastifiant dépend notamment de la quantité de ciment et du dosage d'accélérateur. Le plus souvent, il est exprimé en matière sèche de superplastifiant par rapport au poids cumulé du ciment et d'accélérateur, de 0,05 à 2% et de préférence de 0,1 à 1 %, typiquement environ de 0,125 à 0,6%.

Un extendeur de rhéologie est un composé ayant pour effet de prolonger l'ouvrabilité d'un béton, en maintenant l'étalement du béton frais pendant une durée donnée.

Contrairement à un retardateur, un extendeur de rhéologie permet de prolonger l'ouvrabilité du béton sans pour autant engendrer un retard de la prise important.

Des extendeurs de rhéologie préférés dans le cadre de l'invention sont les polyphosphonates polyalkoxylé décrits dans la demande de brevet FR-2696736. Particulièrement préféré à titre d'extendeur de rhéologie est donc un polyphosphonate polyalkoxylé de formule (III), ou un de ses sels, seul ou en mélange. 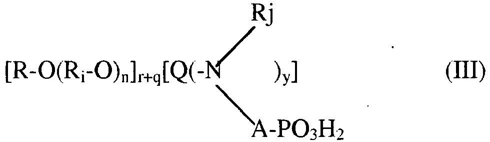 dans laquelle :
R est un atome d'hydrogène ou un groupe hydrocarboné monovalent comportant de 1 à 18 atomes de carbone et éventuellement un ou plusieurs hétéroatomes ;
les Rᵢ sont semblables ou différents entre eux et représentent un alkylène comme l'éthylène, le propylène, le butylène, l'amylène, l'octylène ou le cyclohexène, ou un arylène comme le styrène ou le méthylstyrène, les Rᵢ renferment éventuellement un ou plusieurs hétéroatomes ;
Q est un groupe hydrocarboné comportant de 2 à 18 atomes de carbone et éventuellement un ou plusieurs hétéroatomes ;
A est un groupe alkylidène comportant de 1 à 5 atomes de carbone ;
les Rⱼ sont semblables ou différents entre eux et peuvent être choisis parmi:
   - le groupe A-PO₃H₂, A ayant la signification précitée,
   - le groupe alkyle comportant de 1 à 18 atomes de carbone et pouvant porter des groupements [R-O(Rᵢ-O),], R et Rᵢ ayant les significations précitées,
   - et le groupe 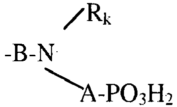
      Rₖ désignant un groupement tel que Rⱼ, - B désignant un groupement alkylène comportant de 2 à 18 atomes de carbone,
      "n" est un nombre supérieur ou égal à 0,
      "r" est le nombre des groupes [R-O(Rᵢ-O)ₙ] portés par l'ensemble des Rj,
      "q" est le nombre des groupes [R-O(RᵢO)ₙ] portés par Q, la somme
      "r+q" est comprise entre 1 et 10,
      "y" est un nombre entier compris entre 1 et 3,
      Q, N et les Rⱼ peuvent former ensemble un ou plusieurs cycles, ce ou ces cycles pouvant en outre contenir un ou plusieurs autres hétéroatomes,

Par exemple, le polyphosphonate polyalkoxylé peut être constitué d'un composé organique hydrosoluble ou hydrodispersible, comportant au moins un groupement amino-di-(alkylène-phosphonique) et au moins une chaîne polyoxyalkylée ou au moins un de ses sels.

Le dosage d'extendeur de rhéologie dépend surtout de la quantité de ciment et du système accélérateur. Le plus souvent, il est exprimé en matière sèche d'extendeur par rapport au poids de liant total (ciment+filler et/ou ajouts cimentaires), de 0,005 à 1% et de préférence de 0,01 à 0,2%, typiquement environ de 0,015 à 0,15%.

Particulièrement préféré est un système constitué des trois composantes décrites ci-dessus, à l'exclusion d'autres adjuvants, tout du moins d'adjuvants susceptibles d'affecter l'ouvrabilité et la résistance précoce.

L'invention a également pour objet un procédé de préparation de béton préfabriqué comprenant l'étape d'ajouter en quantité appropriée respectivement
(a) un superplastifiant
(b) un accélérateur ; et
(c) un extendeur de rhéologie,
simultanément ou successivement, à la pâte de béton.

Avantageusement, le système d'adjuvant est additionné à la composition de béton lors du gâchage, de préférence par ajout à l'eau de gâchage. En variante, les adjuvants peuvent être ajoutés aux composantes solides du béton, notamment au ciment et/ou au sable, mais leur homogénéisation peut être plus difficile

L'ajout peut être réalisé indifféremment, simultanément ou successivement, le plus simple étant généralement de peser successivement les adjuvants avant de les introduire dans l'eau de gâchage.

Bien entendu, d'autres adjuvants habituels connus de l'homme de l'art peuvent également être ajoutés à la composition de béton. A titre d'exemple, on peut citer des entraîneurs d'air et les agents anti-mousses.

Cependant, il est important afin de préserver le compromis de propriétés recherchées de ne pas ajouter d'autres adjuvants ayant un effet sur le temps de prise, et notamment pas de retardateur de prise. En effet, le retard de prise retarde la montée de la résistance et ne permet donc pas l'obtention des valeurs de résistance à la compression à jeunes âges recherchées.

Les compositions de béton pour lesquelles le système d'adjuvants selon l'invention peut être utile peuvent comprendre à titre de liant hydraulique différents types de ciments, tels que par exemple les ciments CEM I, CEM II, CEM III, CEM V tels que décrits dans la norme EN 197-1. Parmi ceux-ci, les ciments CEM I ne comportent pas d'ajouts. Il est néanmoins possible d'additionner des ajouts comme les laitiers, les cendres volantes, les fillers calcaire, les fillers siliceux à ces ciments, Les compositions de béton peuvent être des bétons de classes de résistances différentes, telles que les C25/30 à C50/60.

L'invention sera décrite plus en détail au moyen des exemples suivants.

### EXEMPLES

Les performances des systèmes d'adjuvant selon l'invention, comportant un superplastifiant (SP), un accélérateur (X) et un extendeur de rhéologie (Y) en termes d'ouvrabilité et de résistance précoce ont été comparées à celles des exemples de comparaison pour une composition de béton de formulation suivante, rapportée à 1 m³ :

| | |
|---|---|
| Ciment Portland CEM I 52,5 R (SPLC) | 400 kg |
| Filler La Tour Blanche | 130 kg |
| Sable 0-4 du site de Bernières | 810 kg |
| Gravillon 4/8 du site de Villermain | 280 kg |
| Gravier 8/16 alluvionnaire de Loire | 525 kg |
| Eau | 175 l |

Le ciment utilisé est le ciment de Saint Pierre La Cour produit par la société Lafarge, qui est du type CEM I 52,5R selon la norme EN 197-1.

Les concentrations des adjuvants sont exprimées respectivement en pourcentage d'extrait sec par rapport à la quantité de liant total (ciment + filler et/ou ajouts cimentaires).

### (a) Mesure de l'étalement

L'ouvrabilité a été évaluée par mesure de diamètre d'étalement (slump flow). L'essai est réalisé à l'aide du cône d'Abrams selon la norme EN 12350-2. L'essai consiste à remplir d'un béton fraîchement préparé un moule sans fond de forme tronconique de dimensions suivantes :

| | |
|---|---|
| diamètre du cercle de la base supérieure | 100 +/- 0,5 mm |
| diamètre du cercle de la base inférieure | 200 +/- 0,5 mm |
| hauteur | 300 +/- 0,5 mm. |

On soulève le cône verticalement. L'étalement est mesuré à 5, 15, 30 et 45 minutes selon quatre diamètres à 45° avec un pied à coulisse. Le résultat de la mesure d'étalement est la moyenne des quatre valeurs à +/- 10 mm. Les essais sont réalisés à 20 °C.

### (b) Mesure de la résistance à la compression Rc

La résistance précoce est évaluée par la mesure de la résistance à la compression Rc d'éprouvettes de béton aux échéances de 2, 4, 6, 8 et 24 heures à la température de 20°C, selon la norme PR NF EN 12390-3 (Essai pour béton durci - Partie 3 Résistance à la compression des éprouvettes).

### EXEMPLE A : Superplastifiant seul

On prépare une formulation béton selon les indications ci-dessus en ajoutant à l'eau de gâchage un système d'adjuvant comportant seulement un superplastifiant (SP, CHRYSOFluid Premia 196, commercialisé par la société CHRYSO) dans la quantité indiquée dans le tableau 1.

Les résultats de l'évaluation de la formulation de béton sont rassemblés dans les tableaux 1 et 2. Ils font apparaître que le maintien d'ouvrabilité est assuré sur 45 minutes, mais que la résistance permettant un démoulage des pièces n'est atteinte qu'après 6 h.

### EXEMPLES B et C : Superplastifiant combiné à l'accélérateur

On prépare deux formulations béton avec un système d'adjuvant comprenant un superplastifiant (SP, CHRYSOFluid Premia 196, commercialisé par la société CHRYSO) et un accélérateur (X, Solution aqueuse de nitrite de calcium à 30% en poids), ce dernier étant utilisé à un dosage de 5% en poids de matière sèche, pour l'exemple B et de 9 % pour l'exemple C. OK pour les valeurs

Les résultats de l'évaluation de la formulation de béton sont rassemblés dans les tableaux 1 et 2. L'ajout au superplastifiant d'un accélérateur permet d'assurer une résistance précoce très élevée, d'autant plus que le dosage en accélérateur est augmenté (exemple C). Cependant, l'amélioration de la résistance se fait au détriment de l'ouvrabilité, laquelle conduit à une durée pratique d'utilisation de la formulation comprise entre seulement 15 et 30 minutes.

### EXEMPLE D : Accélérateur combiné à extendeur de rhéologie

On prépare une formulation de béton comme dans les exemples précédents mais avec un système d'adjuvant comprenant un accélérateur (X, Solution aqueuse de nitrite de calcium à 30% en poids) et un extendeur de rhéologie (Y, CHRYSOFluid Optima 100 commercialisé par la société CHRYSO).

Les résultats de l'évaluation de la formulation de béton sont rassemblés dans les tableaux 1 et 2.

On constate qu'en l'absence du superplastifiant, il est nécessaire d'augmenter notablement le dosage en extendeur de rhéologie afin d'obtenir une ouvrabilité assurant une durée pratique d'utilisation comprise entre 30 et 45 minutes. On remarque par ailleurs qu'à même dosage en accélérateur, la résistance précoce est nettement altérée comparée à l'exemple C.

### EXEMPLE E : Superplastifiant combiné à extendeur de rhéologie

On prépare une formulation de béton comme dans les exemples précédents mais avec un système d'adjuvant comprenant maintenant un superplastifiant (SP, CHRYSOFluid Premia 196, commercialisé par la société CHRYSO) et un extendeur de rhéologie (Y, CHRYSOFluid Optima 100 commercialisé par la société CHRYSO).

Les résultats de l'évaluation de la formulation de béton sont rassemblés dans les tableaux 1 et 2.

On constate qu'en l'absence d'accélérateur, le système d'adjuvants assure une ouvrabilité satisfaisante mais les résistances précoces sont insuffisantes.

### EXEMPLES 1 et 2: Superplastifiant combiné à accélérateur et extendeur de rhéologie

On prépare une formulation de béton comme dans les exemples précédents avec un système d'adjuvant comprenant un superplastifiant (SP, CHRYSOFluid Premia 196, commercialisé par la société CHRYSO), un accélérateur (X, Ca(NO₂)₂) et un extendeur de rhéologie (Y, CHRYSOFluid Optima 100 commercialisé par la société CHRYSO) dans les dosages indiqués dans le tableau 1.

On constate comme sur l'exemple D que l'extendeur de rhéologie entraîne une amélioration du maintien d'ouvrabilité.

Cette association d'adjuvants présente un compromis entre maintien de rhéologie satisfaisant sur une durée de 30 minutes s'accompagnant de performances mécaniques de très bon niveau aussi bien à l'échéance de 4 heures qu'à échéance de 6 et 8 heures.

En outre, on remarque que le système selon la présente invention permet, par l'apport d'un faible dosage en extendeur de rhéologie, inférieur à 0,3%, de maintenir la résistance précoce à un niveau excédent largement les spécifications de la préfabrication.

**Tableau 1 : Ouvrabilité (20°C)**

| **Ex** | **SP** | **X** | **Y** | **Etalement (mm)** | | | |
|---|---|---|---|---|---|---|---|
| | **%** | **%** | **%** | 5 min | 15 min | 30 min | 45 min |
| **1** | 0,17 | 2,7 | 0,06 | 705 | 715 | 615 | 550 |
| **2** | 0,17 | 2,7 | 0,12 | 730 | 740 | 735 | 670 |
| **A** | 0,19 | - | - | 710 | 710 | 700 | 690 |
| **B** | 0,19 | 1,5 | - | 725 | 720 | 710 | 680 |
| **C** | 0,19 | 2,7 | - | 720 | 680 | 410 | - |
| **D** | - | 2,7 | 0,6 | 715 | 720 | 700 | 700 |
| **E** | 0,17 | - | 0,12 | 720 | 710 | 720 | 710 |

On constate des résultats rassemblés dans le tableau 1 que les valeurs d'étalement sont insuffisantes pour le système d'adjuvant selon l'exemple C, comportant seulement un superplastifiant et un accélérateur. La présence supplémentaire d'un extendeur de rhéologie permet de revenir vers des valeurs d'étalement acceptables.

**Tableau 2 : Résistances précoces (20°C)**

| **Ex** | **SP** | **X** | **Y** | **Rc (MPa)** | | | | |
|---|---|---|---|---|---|---|---|---|
| | **%** | **%** | **%** | 2 h | 4 h | 6 h | 8 h | 24 h |
| **1** | 0,17 | 2,7 | 0,06 | < 1,5 | 6,5 | 15,5 | 22 | 49,5 |
| **2** | 0,17 | 2,7 | 0,12 | - | 1,6 | 7,5 | 15,5 | 49,1 |
| **A** | 0,19 | - | - | - | - | 4 | 10 | 49,5 |
| **B** | 0,19 | 1,5 | - | - | - | 5 | 9 | 47 |
| **C** | 0,19 | 2,7 | - | - | 11 | 18 | 27 | 50 |
| **D** | - | 2,7 | 0,6 | - | - | - | 6 | 49,5 |
| **E** | 0,17 | - | 0,12 | - | - | - | 2 | 45 |

On note à partir des résultats rassemblés dans le tableau 2 de grandes différences entre les valeurs entre 4h et 8h alors que ces valeurs convergent à 24h. L'ajout supplémentaire d'accélérateur et d'extendeur de rhéologie n'affecte donc pas la valeur de résistance à la compression finale du matériau.

Cependant, on constate que la résistance à la compression à 4h, 6h et 8h des formulations préparées avec les systèmes selon les exemples A et B, contenant pas ou peu d'accélérateur, est nettement insuffisante.

En revanche, on note que l'ajout d'un superplastifiant, d'un accélérateur et d'un extendeur de rhéologie en association permet d'aboutir à un compromis de propriétés en termes de maintien de l'ouvrabilité et de résistance précoce intéressant notamment pour les bétons préfabriqués.

## Revendications

1. Système d'adjuvant pour béton comprenant en association :
(a) un superplastifiant ;
(b) un accélérateur ; et
(c) un extendeur de rhéologie
dans lequel l'extendeur de rhéologie est un polyphosphonate polyalkoxylé de formule (III), ou un de ses sels, seul ou en mélange : 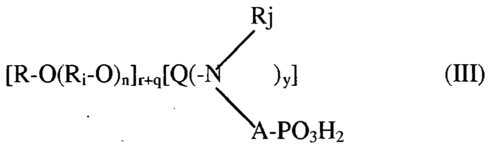 dans laquelle :
R est un atome d'hydrogène ou un groupe hydrocarboné monovalent comportant de 1 à 18 atomes de carbone et éventuellement un ou plusieurs hétéroatomes ;
les Rᵢ sont semblables ou différents entre eux et représentent un alkylène comme l'éthylène, le propylène, le butylène, l'amylène, l'octylene ou le cyclohexène, ou un arylène comme le styrène ou le méthylstyrène, les Rᵢ renferment éventuellement un ou plusieurs hétéroatomes ;
Q est un groupe hydrocarboné comportant de 2 à 18 atomes de carbone et éventuellement un ou plusieurs hétéroatomes ;
A est un groupe alkylidène comportant de 1 à 5 atomes de carbone ;
les Rⱼ sont semblables ou différents entre eux et peuvent être choisis parmi:
- le groupe A-PO₃H₂, A ayant la signification précitée,
- le groupe alkyle comportant de 1 à 18 atomes de carbone et pouvant porter des groupements [R-O(Rᵢ-O)ₙ], R et Rᵢ ayant les significations précitées,
- et le groupe 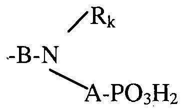
Rₖ désignant un groupement tel que Rⱼ, - B désignant un groupement alkylène comportant de 2 à 18 atomes de carbone,
"n" est un nombre supérieur ou égal à 0,
"r" est le nombre des groupes [R-O(Rᵢ-O)ₙ] portés par l'ensemble des Rj,
"q" est le nombre des groupes [R-O(RᵢO)ₙ] portés par Q, la somme
"r+q" est comprise entre 1 et 10,
"y" est un nombre entier compris entre 1 et 3,
Q, N et les Rⱼ peuvent former ensemble un ou plusieurs cycles, ce ou ces cycles pouvant en outre contenir un ou plusieurs autres hétéroatomes.

2. Système selon la revendication 1, dans lequel l'accélérateur est choisi parmi les sels de calcium.

3. Système selon la revendication 2, dans lequel l'accélérateur est choisi parmi le nitrate calcium, le nitrite de calcium, le chlorure de calcium ou le thiocyanate de calcium.

4. Système selon l'une des revendications 1 à 3, dans lequel le superplastifiant est un polymère peigne comportant au moins les motifs (I) et (II) suivants :
*-R1-(C(O))ₘ-R₂-(Alk-O)ₙ-R3 (I)
où * désigne le point de rattachement au squelette du polymère peigne, R1 une liaison chimique ou un groupement alkylène de 1 à 8 atomes de carbone, m vaut 0 ou 1, R2 désigne un atome d'oxygène ou un groupement amine, Alk désigne un alkylène de 2 à 4 atomes de carbone linéaire ou ramifié, n désigne un nombre entier compris entre 3 et 500, un même polymère pouvant porter des greffons de longueurs différentes, et R3 désigne un atome d'hydrogène ou un groupement hydrocarboné tel qu'un alkyle comportant de 1 à 25 atomes de carbone.
*-R4 (II)
où R4 comprend une fonction anionique à pH supérieur à 10.

5. Système selon la revendication 1, dans lequel l'extendeur de rhéologie est un polyphosphonate polyalkoxylé constitué d'un composé organique hydrosoluble ou hydrodispersible comportant au moins un groupement amino-di-(alkylène-phosphonique) et au moins une chaîne polyoxyalkylée ou au moins un de ses sels.

6. Système selon la revendication 5, dans lequel l'extendeur de rhéologie est un polyphosphonate polyalkoxylé de formule (III) dans laquelle R est un groupe méthyle, les Rᵢ sont des groupements éthylène et propylène, n étant compris entre 30 et 50 r+q vaut 1, Q est un groupe éthylène, A est un groupe méthylène, y vaut 1 et Rⱼ correspond au groupe CH₂-PO₃H₂.

7. Système selon l'une des revendications précédentes, comprenant en poids sec par rapport au poids de liant total 0,3 à 4% d'accélérateur, 0,05 à 2% de superplastifiant et de 0,005 à 1 % d'extendeur de rhéologie.

8. Procédé de préparation de béton préfabriqué comprenant l'étape d'ajouter en quantité appropriée respectivement
(a) un superplastifiant ;
(b); un accélérateur ; et
(c) un extendeur de rhéologie,
simultanément ou successivement, à la pâte de béton, dans lequel l'extendeur de rhéologie est un polyphosphonate polyalkoxylé de formule (III), ou un de ses sels, seul ou en mélange : 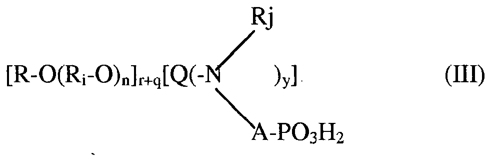 dans laquelle :
R est un atome d'hydrogène ou un groupe hydrocarboné monovalent comportant de 1 à 18 atomes de carbone et éventuellement un ou plusieurs hétéroatomes ;
les Rᵢ sont semblables ou différents entre eux et représentent un alkylène comme l'éthylène, le propylène, le butylène, l'amylène, l'octylene ou le cyclohexène, ou un arylène comme le styrène ou le méthylstyrène, les Rᵢ renferment éventuellement un ou plusieurs hétéroatomes ;
Q est un groupe hydrocarboné comportant de 2 à 18 atomes de carbone et éventuellement un ou plusieurs hétéroatomes ;
A est un groupe alkylidène comportant de 1 à 5 atomes de carbone ;
les Rⱼ sont semblables ou différents entre eux et peuvent être choisis parmi:
- le groupe A-PO₃H₂, A ayant la signification précitée,
- le groupe alkyle comportant de 1 à 18 atomes de carbone et pouvant porter des groupements [R-O(Rᵢ-O)ₙ], R et Rᵢ ayant les significations précitées,
- et le groupe 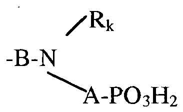
Rₖ désignant un groupement tel que Rⱼ, - B désignant un groupement alkylène comportant de 2 à 18 atomes de carbone,
"n" est un nombre supérieur ou égal à 0,
"r" est le nombre des groupes [R-O(Rᵢ-O)ₙ] portés par l'ensemble des Rj,
"q" est le nombre des groupes [R-O(RᵢO)ₙ] portés par Q, la somme
"r+q" est comprise entre 1 et 10,
"y" est un nombre entier compris entre 1 et 3,
Q, N et les Rⱼ peuvent former ensemble un ou plusieurs cycles, ce ou ces cycles pouvant en outre contenir un ou plusieurs autres hétéroatomes.

9. Utilisation du système d'adjuvant selon l'une des revendications 1 à 7 pour la préparation de bétons préfabriqués.

## Patentansprüche

1. Zusatzsystem für Beton, in Assoziation umfassend:
(a) einen Superplastifizierer;
(b) einen Beschleuniger; und
(c) ein rheologisches Streckmittel
wobei das rheologische Streckmittel ein polyalkoxyliertes Polyphosphonat der Formel (III) oder eines seiner Salze, allein oder in Mischung ist: 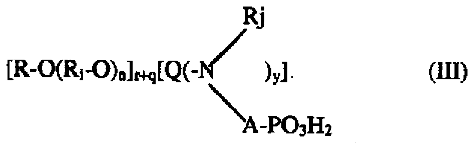 in der:
R ein Wasserstoffatom oder eine monovalente Kohlenwasserstoffgruppe ist, die 1 bis 18 Kohlenstoffatome und gegebenenfalls ein oder mehrere Heteroatome aufweist;
wobei die Rᵢ gleich oder unterschiedlich zueinander sind und ein Alkylen wie Ethylen, Propylen, Butylen, Amylen, Octylen oder Cyclohexen oder ein Arylen, wie Styren oder Methylstyren repräsentieren, wobei die Rᵢ gegebenenfalls ein oder mehrere Heteroatome einschließen;
Q eine Kohlenwasserstoffgruppe ist, die 2 bis 18 Kohlenstoffatome und gegebenenfalls ein oder mehrere Heteroatome aufweist;
A eine Alkylidengruppe ist, die 1 bis 5 Kohlenstoffatome aufweist; wobei die Rᵢ gleich oder unterschiedlich zueinander sind und ausgewählt werden können aus:
- der Gruppe A-PO₃H₂, wobei A die zuvor erwähnte Bedeutung hat,
- der Alkylgruppe, die 1 bis 18 Kohlenstoffatome aufweist und Gruppierungen [R-O(Rᵢ-O)ₙ] tragen kann, wobei R und Rᵢ die zuvor erwähnten Bedeutungen haben;
- und der Gruppe 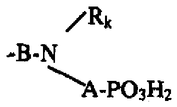
wobei Rₖ eine Gruppierung wie Rⱼ bezeichnet, - B eine Alkylengruppierung bezeichnet, die 2 bis 18 Kohlenstoffatome aufweist,
"n" eine Zahl größer oder gleich 0 ist,
"r" die Zahl der Gruppen [R-O(Rᵢ-O)ₙ] ist, die von der Gesamtheit der Rj getragen werden,
"q" die Zahl der Gruppen [R-O(Rᵢ-O)ₙ] ist, die durch Q getragen werden, die Summe "r+q" zwischen 1 und 10 liegt,
"γ" eine ganze Zahl zwischen 1 und 3 ist,
Q, N und die Rⱼ zusammen einen oder mehrere Zyklen bilden können, wobei dieser oder diese Zyklen außerdem ein oder mehrere andere Heteroatome enthalten können.

2. System nach Anspruch 1, bei dem der Beschleuniger aus den Calciumsalzen gewählt ist.

3. System nach Anspruch 2, bei dem der Beschleuniger ausgewählt ist aus Calciumnitrat, Calciumnitrit, Calciumchlorid oder Calciumthiocyanat.

4. System nach einem der Ansprüche 1 bis 3, bei dem der Superplastifizierer ein Kammpolymer ist, das mindestens die folgenden Motive (I) und (II) aufweist:
*-R1-(C(O))ₘ-R₂-(Alk-O)ₙ-R3 (I)
wobei * den Anknüpfungspunkt an das Grundgerüst des Kammpolymers bezeichnet, R1 eine chemische Bindung oder eine Alkylengruppierung mit 1 bis 8 Kohlenstoffatomen, m 0 oder 1 ist, R2 ein Sauerstoffatom oder eine Aminogruppierung bezeichnet, Alk ein Alkylen von 2 bis 4 linearen oder verzweigten Kohlenstoffatomen bezeichnet, n eine ganze Zahl zwischen 3 und 500 bezeichnet, wobei ein selbes Polymer Pfropfeinheiten unterschiedlicher Länge tragen kann, und R3 ein Wasserstoffatom oder eine Kohlenwasserstoffgruppierung wie ein Alkyl, die 1 bis 25 Kohlenstoffatome aufweist, bezeichnet
*-R4 (II)
wobei R4 eine anionische Funktion mit einem pH-Wert größer als 10 umfasst.

5. System nach Anspruch 1, bei dem das rheologische Streckmittel ein polyalkoxyliertes Polyphosphonat ist, das aus einer wasserlöslichen oder wasserdispergierbaren organischen Verbindung besteht, die mindestens eine Amino-Di-(Alkylenphosphonat)-Gruppierung und mindestens eine polyoxyalkylierte Kette oder mindestens eines ihrer Salze aufweist.

6. System nach Anspruch 5, bei dem das rheologische Streckmittel ein polyalkoxyliertes Polyphosphonat der Formel (III) ist, bei dem R eine Methylgruppe ist, wobei Rᵢ Ethylen- oder Propylengruppierungen sind, n zwischen 30 und 50 ist, r+q 1 ist, Q eine Ethylengruppe ist, A eine Methylengruppe ist, y 1 ist und Rⱼ der Gruppe CH₂-PO₃H₂ entspricht.

7. System nach einem der vorhergehenden Ansprüche, umfassend in Trockengewicht in Bezug auf das Gewicht des gesamten Bindemittels 0,3 bis 4% Beschleuniger, 0,05 bis 2% Superplastifizierer und 0,005 bis 1% rheologisches Streckmittel.

8. Verfahren zur Herstellung von Fertigbeton, umfassend den Schritt des Zufügens in einer geeigneten Menge jeweils
(a) eines Superplastifizierers;
(b) eines Beschleunigers; und
(c) eines rheologischen Streckmittels
gleichzeitig oder nacheinander zu der Betonpaste, wobei das rheologische Streckmittel ein polyalkoxyliertes Polyphosphonat der Formel (III) oder eines seiner Salze, allein oder in Mischung ist: 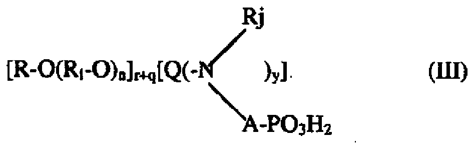 in der:
R ein Wasserstoffatom oder eine monovalente Kohlenwasserstoffgruppe ist, die 1 bis 18 Kohlenstoffatome und gegebenenfalls ein oder mehrere Heteroatome aufweist;
wobei die Rᵢ gleich oder unterschiedlich zueinander sind und ein Alkylen wie Ethylen, Propylen, Butylen, Amylen, Octylen oder Cyclohexen oder ein Arylen, wie Styren oder Methylstyren repräsentieren, wobei die Rᵢ gegebenenfalls ein oder mehrere Heteroatome einschließen; Q eine Kohlenwasserstoffgruppe ist, die 2 bis 18 Kohlenstoffatome und gegebenenfalls ein oder mehrere Heteroatome aufweist;
A eine Alkylidengruppe ist, die 1 bis 5 Kohlenstoffatome aufweist; wobei die Rᵢ gleich oder unterschiedlich zueinander sind und ausgewählt werden können aus:
- der Gruppe A-PO₃H₂, wobei A die zuvor erwähnte Bedeutung hat,
- der Alkylgruppe, die 1 bis 18 Kohlenstoffatome aufweist und Gruppierungen [R-O(Rᵢ-Q)ₙ] tragen kann, wobei R und R₁ die zuvor erwähnten Bedeutungen haben;
- und der Gruppe 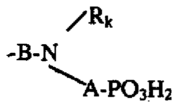
wobei Rₖ eine Gruppierung wie Rⱼ bezeichnet, - B eine Alkylengruppierung bezeichnet, die 2 bis 18 Kohlenstoffatome aufweist,
"n" eine Zahl größer oder gleich 0 ist,
"r" die Zahl der Gruppen [R-O(R₁-O)ₙ] ist, die von der Gesamtheit der Rj getragen werden,
"q" die Zahl der Gruppen [R-O(Rᵢ-O)ₙ] ist, die durch Q getragen werden,
die Summe "r+q" zwischen 1 und 10 liegt,
"γ" eine ganze Zahl zwischen 1 und 3 ist,
Q, N und die Rⱼ zusammen einen oder mehrere Zyklen bilden können, wobei dieser oder diese Zyklen außerdem ein oder mehrere andere Heteroatome enthalten können.

9. Verwendung des Zusatzsystems nach einem der Ansprüche 1 bis 7 für die Herstellung von Fertigbeton.

## Claims

1. An adjuvant system for concrete comprising as a combination:
(a) a superplasticizer;
(b) an accelerator; and
(c) a rheology extender, wherein the rheology extender is a polyalkoxylated polyphosphonate of formula (III) or one of the salts, alone or as a mixture: 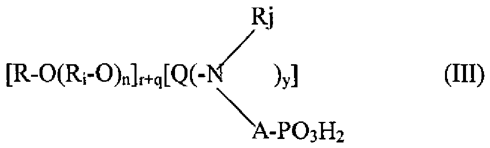 wherein:
R is a hydrogen atom or a monovalent hydrocarbon group including from 1 to 18 carbon atoms and optionally one or more heteroatoms;
the Rᵢ are similar or different from each other and represent an alkylene such as ethylene, propylene, butylene, amylene, octylene or cyclohexene, or an arylene such as styrene or methylstyrene, the Rᵢ optionally contain one or more heteroatoms;
Q is a hydrocarbon group including from 2 to 18 carbon atoms and optionally one or more heteroatoms;
A is an alkylidene group including from 1 to 5 carbon atoms;
the Rⱼ are similar or different from each other and may be selected from:
- the A-PO₃H₂ group, A having the aforementioned meaning,
- the alkyl group including from 1 to 18 carbon atoms and being able to bear [R-O(Rᵢ-O)ₙ] groups, R and Rᵢ having the aforementioned meanings,
- and the group 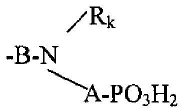
Rₖ designating a group such as Rⱼ, - B designating an alkylene group including from 2 to 18 carbon atoms,
"n" is a number greater than or equal to 0,
"r" is the number of [R-O(Rᵢ-O)ₙ] groups borne by the whole of the Rj,
"q" is the number of [R-O(RᵢO)ₙ] groups borne by Q, the sum "r+q" is comprised between 1 and 10,
"y" is an integer comprised between 1 and 3,
Q, N and the Rⱼ may form together one or more rings, this or these rings may further contain one or more other heteroatoms.

2. The system according to claim 1, wherein the accelerator is selected from calcium salts.

3. The system according to claim 2, wherein the accelerator is selected from calcium nitrate, calcium nitrite, calcium chloride or calcium thiocyanate.

4. The system according to one of claims 1 to 3, wherein the superplasticizer is a comb polymer including at least the following units (I) and (II):
*-R1-(C(O))ₘ-R₂-(Alk-O)ₙ-R3 (I)
wherein * designates the attachment point to the backbone of the comb polymer, R1 is a chemical bond or an alkylene group with 1 to 8 carbon atoms, m is 0 or 1, R2 designates an oxygen atom or an amine group, Alk designates an linear or branched alkylene with 2 to 4 carbon atoms, n designates an integer comprised between 3 and 500, a same polymer being able to bear grafts of different lengths, and R3 designates a hydrogen atom or a hydrocarbon group such as an alkyl including from 1 to 25 carbon atoms,
*-R4 (II)
wherein R4 comprises an anionic function with a pH above 10.

5. The system according to claim 1, wherein the rheology extender is a polyalkoxylated polyphosphonate constituted by a water-soluble or water-dispersible organic compound including at least one amino-di-(alkylene-phosphonic) group and at least one polyalkoxylated chain or at least one of its salts.

6. The system according to claim 5, wherein the rheology extender is a polyalkoxylated polyphosphonate of formula (III) wherein R is a methyl group, the Rᵢ are ethylene and propylene groups, n being comprised between 30 and 50, r+q is 1, Q is an ethylene group, A is a methylene group, y is 1 and Rⱼ corresponds to the CH₂-PO₃H₂ group.

7. The system according to one of the preceding claim, comprising, 0.3 to 4% of accelerator, 0.05 to 2% of superplasticizer and 0.005 to 1% of rheology extender expressed as dry weight based on the weight of total binder.

8. A method for preparing prefabricated concrete comprising the step of adding in a suitable amount, respectively,
(a) a superplasticizer;
(b) an accelerator; and
(c) a rheology extender,
simultaneously or successively, to the concrete slurry, wherein the rheology extender is a polyalkoxylated polyphosphonate of formula (III) or one of the salts, alone or as a mixture: 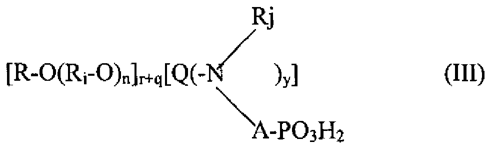 wherein:
R is a hydrogen atom or a monovalent hydrocarbon group including from 1 to 18 carbon atoms and optionally one or more heteroatoms;
the Rᵢ are similar or different from each other and represent an alkylene such as ethylene, propylene, butylene, amylene, octylene or cyclohexene, or an arylene such as styrene or methylstyrene, the Rᵢ optionally contain one or more heteroatoms;
Q is a hydrocarbon group including from 2 to 18 carbon atoms and optionally one or more heteroatoms;
A is an alkylidene group including from 1 to 5 carbon atoms;
the Rⱼ are similar or different from each other and may be selected from:
- the A-PO₃H₂ group, A having the aforementioned meaning,
- the alkyl group including from 1 to 18 carbon atoms and being able to bear [R-O(Rᵢ-O)ₙ] groups, R and Rᵢ having the aforementioned meanings,
- and the group 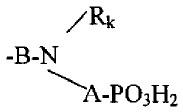
Rₖ designating a group such as Rⱼ, - B designating an alkylene group including from 2 to 18 carbon atoms,
"n" is a number greater than or equal to 0,
"r" is the number of [R-O(Rᵢ-O)ₙ] groups borne by the whole of the Rj,
"q" is the number of [R-O(Ri_{O})ₙ] groups borne by Q, the sum
"r+q" is comprised between 1 and 10,
"y" is an integer comprised between 1 and 3,
Q, N and the Rᵢ may form together one or more rings, this or these rings may further contain one or more other heteroatoms.

9. The use of the adjuvant system according to one of claims 1 to 7 for preparing prefabricated concrete.
